# EUROPEAN PATENT APPLICATION

(11) **EP 4 600 181 A1**
(43) Date of publication of application: **13.08.2025**
(21) Application number: 24741195.2
(22) Date of filing: 08.01.2024
(51) Int. Cl.: B65G 1/137

(54) **CARGO RETRIEVING AND PLACING ASSEMBLY, PALLET FORK, ROBOT AND WAREHOUSING SYSTEM**

(30) Priority: 12.01.2023 CN 202310070242
(71) Applicant: Hai Robotics Co., Ltd., Shenzhen, Guangdong 518000 (CN)
(72) Inventor: CHEN, Ronglong, Shenzhen, Guangdong 518000 (CN)
(74) Representative: Nederlandsch Octrooibureau
(86) International application number: PCT/CN2024/071129
(87) International publication number: WO 2024/149196

(57) **Abstract**

Embodiments of this application relate to the field of logistics and warehousing technologies. A picking or placing assembly, a fork, a robot, and a warehousing system are disclosed. The picking or placing assembly includes: a body structure, a telescopic mechanism, and a driving mechanism. The telescopic mechanism includes a first flexible member and a second flexible member. When the telescopic mechanism is in an extended state relative to the body structure, at least part of the first flexible member and at least part of the second flexible member are interlocked to form a rigid arm, where at least part of the rigid arm is configured to extend relative to the body structure. When the telescopic mechanism is in a retracted state relative to the body structure, at least part of the first flexible member and at least part of the second flexible member are separated from each other, and at least part of the first flexible member and at least part of the second flexible member are bent. The driving mechanism is connected to the telescopic mechanism. In the foregoing manner, the picking or placing assembly provided in embodiments of this application is capable of satisfying the requirement of picking up a large-volume container with a reduced volume of the picking or placing assembly, thereby improving space utilization of the warehousing system.

## Description

### CROSS-REFERENCES

This application claims priority to Chinese patent application No. 202310070242.7, entitled "PICKING OR PLACING ASSEMBLY, FORK, ROBOT, AND WAREHOUSING SYSTEM", filed with the China National Intellectual Property Administration on January 12, 2023, which is incorporated herein by reference in its entirety.

### TECHNICAL FIELD

Embodiments of this application relate to the field of logistics and warehousing technologies, and specifically, to a picking or placing assembly, a fork, a robot, and a warehousing system.

### BACKGROUND OF THE INVENTION

Currently, in the field of intelligent logistics and warehousing, containers need to be picked up and transferred by using a robot. The robot is generally provided with a fork. When a container is being picked up, a telescopic arm on the fork extends out and engaged with the container, so that the container is moved onto the fork during retraction of the telescopic arm, thereby picking up the container. When placing the container, the telescopic arm extends relative to the fork, and drives the container on the fork to move outward during extension, so as to place the container at a target location.

Most of the existing telescopic arms are long and have rigid plate-like structures. To pick up a large-volume container, the length of the telescopic arm needs to be greater than the size of the container in a telescoping direction of the telescopic arms, so as to ensure that the telescopic arm is able to normally engage with the container on the back after being extended. However, a telescopic arm with a relatively larger length may lead to an increase in an overall volume of the fork, which in turn increases an overall size of the robot. To ensure normal movement of the robot, a lane having a sufficient width needs to be reserved between racks in the warehouse at the cost of overall space utilization of the warehouse, which reduces a container storage capacity of the warehouse.

### SUMMARY OF THE INVENTION

In view of the foregoing problems, embodiments of this application provide a picking or placing assembly, a fork, a robot, and a warehousing system, to satisfy a requirement of picking up a large-volume container with a reduced volume of the picking or placing assembly, thereby improving space utilization of the warehousing system.

According to an aspect of the embodiments of this application, a picking or placing assembly is provided and includes: a body structure, a telescopic mechanism, and a driving mechanism. The telescopic mechanism includes: a first flexible member slidably connected to the body structure; and a second flexible member slidably connected to the body structure. When the telescopic mechanism is in an extended state relative to the body structure, at least part of the first flexible member and at least part of the second flexible member are interlocked to form a rigid arm, at least part of the rigid arm is configured to extend relative to the body structure, and the rigid arm is configured to pick up or place a container; and when the telescopic mechanism is in a retracted state relative to the body structure, at least part of the first flexible member and at least part of the second flexible member are separated from each other, and at least part of the first flexible member and at least part of the second flexible member are bent. The driving mechanism is connected to the telescopic mechanism, and is configured to drive the telescopic mechanism to telescopically slide relative to the body structure.

In some embodiments, a side of the first flexible member and a side of the second flexible member that face each other are provided with interlocked structures, and the first flexible member and the second flexible member are interlocked through cooperation between the interlocked structures.

In some embodiments, each interlocked structure includes at least one of zipper teeth and magnets.

In some embodiments, both the first flexible member and the second flexible member are bendable only in a direction perpendicular to a respective telescoping direction of the first flexible member and the second flexible member; and the first flexible member and the second flexible member are fastened to each other at an end in an extension direction, so that the first flexible member and second flexible member that are extended are interlocked to form the rigid arm.

In some embodiments, when the telescopic mechanism is in the retracted state, at least part of the first flexible member and at least part of the second flexible member are bent in a fold-back form.

In some embodiments, when the telescopic mechanism is in the retracted state, at least part of the first flexible member and at least part of the second flexible member are bent in opposite directions.

In some embodiments, the first flexible member includes a first segment and a second segment that are connected, and the second flexible member includes a third segment and a fourth segment that are connected; and when the telescopic mechanism is in the retracted state, the first segment and the third segment are bent, and the first segment and the third segment are bent in opposite directions, at least part of the second segment and at least part of the fourth segment are straight, and at least part of the second segment and at least part of the fourth segment are interlocked to form the rigid arm.

In some embodiments, when the telescopic mechanism is in the extended state, the second segment and the fourth segment are entirely interlocked, at least part of the first segment and at least part of the third segment are straight, at least part of the first segment and at least part of the third segment are interlocked, and the at least part of the first segment and the at least part of the third segment that are interlocked together with the second segment and the fourth segment that are entirely interlocked jointly form the rigid arm.

In some embodiments, when the telescopic mechanism is in the extended state, the first segment and the third segment are entirely straight, the first segment and the third segment are entirely interlocked, and the first segment and the third segment that are entirely interlocked together with the second segment and the fourth segment that are entirely interlocked jointly form the rigid arm.

In some embodiments, the body structure includes a base body and a cover, and a side of the base body defines a first sliding groove, a second sliding groove and a cooperation groove; the first sliding groove includes a first curved groove and a first straight groove communicating with each other; the second sliding groove includes a second curved groove and a second straight groove communicating with each other; the first straight groove and the second straight groove extend in the telescoping direction; an end of the first straight groove and an end of the second straight groove in the extension direction both communicate with the cooperation groove, and an end of the cooperation groove in the extension direction communicates with the outside of the base body; the first flexible member is slidably disposed in the first sliding groove, and the second flexible member is slidably disposed in the second sliding groove; when the telescopic mechanism is in the retracted state, at least part of the first flexible member is disposed in the first curved groove, at least part of the second flexible member is disposed in the second curved groove, and the first flexible member located in the first curved groove is separated from the second flexible member located in the second curved groove; when the telescopic mechanism is in the extended state, both the first flexible member and the second flexible member move toward the extension direction, and the first flexible member and the second flexible member that enter and pass through the cooperation groove are interlocked to form the rigid arm, and at least part of the rigid arm extends out of the base body from the end of the cooperation groove; and the cover is disposed on the side of the base body on which the first sliding groove is located.

In some embodiments, a first guide ball is movably connected to an end of the first flexible member that is away from the cooperation groove in the extension direction of the first flexible member, and the first guide ball is configured to move with the first flexible member in the first sliding groove; and/or a second guide ball is movably connected to an end of the second flexible member that is away from the cooperation groove in the extension direction of the second flexible member, and the second guide ball is configured to move with the second flexible member in the second sliding groove.

In some embodiments, a guiding and limiting member is provided on the body structure, and the guiding and limiting member is configured to abut a side of at least part of the first flexible member and a side of at least part of the second flexible member that are opposite when the telescopic mechanism slides relative to the body structure, so that the at least part of the first flexible member and the at least part of the second flexible member are interlocked to form the rigid arm, and the rigid arm telescopically slides in a fixed telescoping direction.

In some embodiments, the guiding and limiting member includes a limiting wheel rotatably connected to the body structure, and the limiting wheel is configured to cooperate with two sides of the rigid arm, so that the limiting wheel rotates in accordance with sliding of the rigid arm.

In some embodiments, the first flexible member and the second flexible member are disposed in mirror symmetry relative to a straight line parallel to the telescoping direction.

In some embodiments, the driving mechanism includes a driving member and a driven wheel, the driving member is connected to the first flexible member and/or the second flexible member through the driven wheel, and the driving member is configured to drive the telescopic mechanism to slide through the driven wheel.

In some embodiments, a driven cooperation structure is provided on at least one of the side of the first flexible member and the side of the second flexible member that are opposite; driven teeth are provided along periphery of the driven wheel, so that when the driven wheel rotates, the driven wheel is successively connected to different positions of the driven cooperation structure through the driven teeth, to drive the telescopic mechanism to slide.

In some embodiments, an output axis of the driving member is connected to the driven wheel through a right-angle reducer, so that a plane in which the output axis is located is coplanar with or parallel to a plane in which the rigid arm is located.

In some embodiments, the telescopic mechanism further includes a pulling member rotatably provided on an end of the rigid arm facing in the extension direction, the pulling member is configured to rotate when the rigid arm is in the extended state and to protrude from a side of the rigid arm, to pull and move the container during retraction of the rigid arm; and a limiting sensor is provided on the rigid arm, and the limiting sensor is configured to detect a rotation angle of the pulling member and to control the pulling member to stop rotating after the pulling member rotates into position.

In some embodiments, a position detection sensor is provided at an end of the rigid arm, and the position detection sensor is configured to detect a pose of the container.

In some embodiments, a container picking or placing sensor is provided at a side of the rigid arm, and the container picking or placing sensor is configured to detect whether there is a container on the side of the rigid arm.

In some embodiments, the picking or placing assembly further includes a pushing member provided at a side of the rigid arm, and the pushing member is configured to push and move the container during extension of the rigid arm.

According to another aspect of the embodiments of this application, a fork is provided. The fork includes a housing and the picking or placing assembly according to any one of the foregoing aspects, where there are two picking or placing assemblies and the two picking or placing assemblies are disposed on two opposite sides of the housing respectively, an area between the two picking or placing assemblies on the housing forms a container storage area, and the two picking or placing assemblies are configured to pull a container into the container storage area and/or push a container out of the container storage area.

In some embodiments, the fork further includes a tray, where the tray is disposed in the container storage area, and the tray is configured to carry a container; and the tray is slidably connected to the housing in an extension direction of a rigid arm, a sliding travel of the tray is less than or equal to a sliding travel of the telescopic mechanism, and the tray is configured to cooperate with the telescopic mechanism during sliding to perform picking up or placing of the container.

In some embodiments, the picking or placing assembly further includes a pushing member provided at a side of the rigid arm, where the pushing member is configured to push and withdraw the tray during retraction of the rigid arm.

According to another aspect of the embodiments of this application, a robot is provided. The robot includes a chassis, a vertical post, and the fork according to any one of the foregoing aspects, where the vertical post is disposed on the chassis, and the fork can be disposed on the vertical post and capable of lifting or lowering relative to the vertical post.

According to another aspect of the embodiments of this application, a warehousing system is provided, including a rack and the robot described above, where the robot is configured to transport a container to the rack and/or transport a container from the rack.

According to the picking or placing assembly provided in the embodiment of this application, the telescopic mechanism including the first flexible member and the second flexible member slidably connected to the body structure is used. Therefore, when an operation of picking up and placing the container is not performed, that is, when the telescopic mechanism is in a retracted state, sizes of the first flexible member and the second flexible member can be reduced in the telescoping direction by means of bending and deformation, thereby reducing the overall space occupied by the picking or placing assembly in the telescoping direction, which in turn reduces widths of the forks and the robot, and improves space utilization of the warehousing system. In addition, the telescopic mechanism including the first flexible member and the second flexible member has a simple overall structure, low costs, and is easy to maintain. When the telescopic mechanism extends from the body structure to perform the operation of picking up and placing the container, the rigid arm formed by interlocking the first flexible member and the second flexible member 122 can reliably pick and place the container, thereby ensuring safety of the operation.

The foregoing description is merely a brief description of technical solutions of this application. To understand the technical means of this application more clearly, implementation may be performed according to content of the specification. In addition, to make the foregoing and other objectives, features, and advantages of this application more obvious and understandable, specific implementations of this application are specifically listed below.

### BRIEF DESCRIPTION OF DRAWINGS

Various other advantages and benefits become clear to a person of ordinary skill in the art by reading the following detailed description of exemplary implementations. The accompanying drawings are merely used for illustrating the preferred implementations and are not intended to constitute a limitation on this application. Throughout the accompanying drawings, the same reference numerals are used to represent the same components. In the accompanying drawings:
FIG. 1 is a schematic structural diagram of a picking or placing assembly in a retracted state according to an embodiment of the present disclosure;
FIG. 2 is a schematic structural diagram of a picking or placing assembly in an extended state according to an embodiment of the present disclosure;
FIG. 3 is a schematic structural diagram of interlocked first and second flexible members of a picking or placing assembly according to an embodiment of the present disclosure;
FIG. 4 is a schematic structural diagram of interlocked first and second flexible members of a picking or placing assembly according to another embodiment of the present disclosure;
FIG. 5 is a schematic structural diagram of a variation according to an embodiment shown in FIG. 4;
FIG. 6 is a schematic structural diagram of interlocked first and second flexible members of a picking or placing assembly according to another embodiment of the present disclosure;
FIG. 7 is a schematic structural diagram of a variation according to an embodiment shown in FIG. 6;
FIG. 8 is a schematic structural diagram of another variation according to an embodiment shown in FIG. 6;
FIG. 9 is a schematic structural diagram of bent first and second flexible members in a fold-back configuration of a picking or placing assembly according to an embodiment of the present disclosure;
FIG. 10 is a schematic structural diagram of bent first and second flexible members in a fold-back configuration of a picking or placing assembly according to another embodiment of the present disclosure;
FIG. 11 is a schematic structural diagram of bent first and second flexible members in a fold-back configuration of a picking or placing assembly according to another embodiment of the present disclosure;
FIG. 12 is a schematic structural diagram of bent first and second flexible members in a fold-back configuration of a picking or placing assembly according to another embodiment of the present disclosure;
FIG. 13 is a schematic structural diagram of a side of a picking or placing assembly in a retracted state according to an embodiment of the present disclosure;
FIG. 14 is a schematic structural diagram of a side of a picking or placing assembly at a moment in an extended state according to an embodiment of the present disclosure;
FIG. 15 is a schematic structural diagram of a side of a picking or placing assembly at another moment in an extended state according to an embodiment of the present disclosure;
FIG. 16 is a schematic structural diagram of a picking or placing assembly according to an embodiment of the present disclosure;
FIG. 17 is a schematic exploded structural diagram of a picking or placing assembly according to an embodiment of the present disclosure;
FIG. 18 is a schematic structural diagram of a picking or placing assembly at a moment in an extended state according to an embodiment of the present disclosure;
FIG. 19 is a schematic structural diagram of a first flexible member and a first sliding groove of a picking or placing assembly being stuck at a position with a relatively large curvature according to an embodiment of the present invention;
FIG. 20 is a schematic structural diagram of cooperating, by a first guide ball, a first flexible member with a first sliding groove of a picking or placing assembly according to an embodiment of the present invention;
FIG. 21 is a top schematic structural diagram of a picking or placing assembly when starting to pick up goods according to an embodiment of the present invention;
FIG. 22 is a top schematic structural diagram of a pulling member of a picking or placing assembly after rotating out of the back of a container according to an embodiment of the present invention;
FIG. 23 is a top schematic structural diagram of a picking or placing assembly after picking up a container according to an embodiment of the present invention;
FIG. 24 is a schematic structural diagram of a fork in a retracted state according to an embodiment of the present disclosure;
FIG. 25 is a schematic structural diagram of a fork in an extended state according to an embodiment of the present disclosure;
FIG. 26 is a schematic structural diagram of a robot according to an embodiment of the present disclosure;
FIG. 27 is a schematic structural diagram of a warehousing system according to an embodiment of the present disclosure.

Reference numbers in DESCRIPTION OF EMBODIMENTS are as follows:
100. picking or placing assembly; 110. body structure; 111. guiding and limiting member; 1111. limiting wheel; 112. base body; 1121. first sliding groove; 11211. first curved groove; 11212. first straight groove; 1122. second sliding groove; 11221. second curved groove; 11222. second straight groove; 1123. cooperation groove; 113. cover; 120. telescopic mechanism; 121. first flexible member; 1211. first segment; 1212. second segment; 1213. first guide ball; 122. second flexible member; 1221. third segment; 1222. fourth segment; 1223. second guide ball; 123. rigid arm; 1231. mounting part; 124. interlocked structure; 1241. zipper tooth; 1242. magnet; 125. limiting block; 126. fixing block; 127. pulling member; 128. position detection sensor; 129. container picking or placing sensor; 130. driving mechanism; 131. driving member; 132. driven wheel; 133. right-angle reducer; 140. pushing member;
200. fork; 210. housing; 220. container storage area; 230. tray;
300. robot; 310. chassis; 320: vertical post;
400. warehousing system; 410. rack;
500. container.

### DETAILED DESCRIPTION

The following describes the embodiments of technical solutions of this application with reference to the accompanying drawings. The following embodiments are merely used to describe the technical solutions of this application more clearly, and therefore are merely used as examples, but are not intended to limit the protection scope of this application.

Unless otherwise defined, meanings of all technical and scientific terms used in this specification are the same as those usually understood by a person skilled in the art to which this application belongs. The terms used herein are merely intended to describe objectives of the specific embodiments, but are not intended to limit this application. The terms "include", "comprise", "have", and any variant thereof in the specification and claims of this application and the accompanying drawings are intended to cover a non-exclusive inclusion.

In description of the embodiments of this application, the technical terms such as "first" and "second" are only used to distinguish different objects, and are not to be construed as indicating or implying relative importance or implicitly indicating the number, specific order, or primary and secondary relationship of the indicated technical features. In the description of the embodiments of this application, "a plurality of" means two or more, unless otherwise definitely and specifically limited.

Embodiment mentioned in the specification means that particular features, structures, or characteristics described with reference to the embodiment may be included in at least one embodiment of this application. The occurrence of the phrase at various positions in the specification does not necessarily refer to the same embodiment, nor is an independent or alternative embodiment mutually exclusive to other embodiments. A person skilled in the art explicitly or implicitly understands that the embodiments described in the specification may be combined with other embodiments.

In the description of the embodiments of this application, the term "and/or" describes only an association relationship for describing associated objects and represents that three relationships may exist. For example, A and/or B may represent the following three containers: Only A exists, both A and B exist, and only B exists. In addition, the character "/" in this specification generally indicates an "or" relationship between the associated objects.

In the description of the embodiments of this application, the term "multiple" refers to two or more (including two). Similarly, "multiple sets" refers to two or more (including two) sets, and "multiple pieces" refers to two or more (including two) pieces.

In the description of the embodiments of this application, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the embodiments of this application.

In the description of the embodiments of this application, unless otherwise explicitly specified or defined, the terms such as "mount", "connect", "connection", and "fix" should be understood in a broad sense. For example, the connection may be a fixed connection, a detachable connection, or an integral connection; or the connection may be a mechanical connection or an electrical connection; or the connection may be a direct connection, an indirect connection through an intermediate medium, internal communication between two components, or an interaction relationship between two components. A person of ordinary skill in the art may understand the specific meanings of the foregoing terms in the embodiments of this application according to specific situations.

In an intelligent warehouse, space utilization is an important indicator that affects a quantity of containers that can be stored in the warehouse. Because a size of a long rigid board-shaped telescopic arm is relatively large, a size of a fork provided with the telescopic arm is enlarged. In order that a robot in which the fork is located can work normally in the warehouse, a lane with a sufficient width needs to be reserved between racks. Consequently, an area in which containers can be placed in the warehouse is reduced, and space utilization is reduced.

To reduce a width of the robot, the telescopic arm may be provided with multi-level joint arms that are slidably connected to each other. In a retracted state, projections of the multi-level joint arms in a direction perpendicular to a telescoping direction coincide, thereby reducing an overall size of the telescopic arm in the telescoping direction. In an extended state, the multi-level joint arms may slide relative to each other in the telescoping direction, so that a maximum extended length of the telescopic arm may be equal to a sum of lengths of the multi-level joint arms, thereby implementing picking or placing of a large-volume container or a container in a deep position. However, due to the multiple transmission stages and complex structure of the multi-level joint arms, production, assembly, and maintenance costs are high, and stability is poor.

Considering that a flexible telescopic member is bendable, a size in the telescoping direction can be reduced through bending during retraction. However, also because the flexible telescopic member is bendable, reliable telescoping in a straight direction (that is, the telescoping direction) cannot be implemented, and further the container cannot be effectively pushed or pulled to implement picking up or placing of the container.

Based on this, two flexible telescopic members may be used. When the two flexible telescopic members extend together, the two flexible telescopic members are interlocked to form a rigid straight arm in the telescoping direction. The straight arm implements picking or placing of the container. During retraction, the two flexible telescopic members are unlocked and separated from each other, to respectively form flexible parts. Further, the two flexible telescopic members may be separately bent to reduce a size in the telescoping direction, so that the width of the robot as a whole in the telescoping direction is reduced. In this way, only a relatively narrow lane needs to be arranged in the warehouse for the robot to move and pick up or place the container, so as to facilitate arranging racks in more areas, thereby improving space utilization of the warehouse.

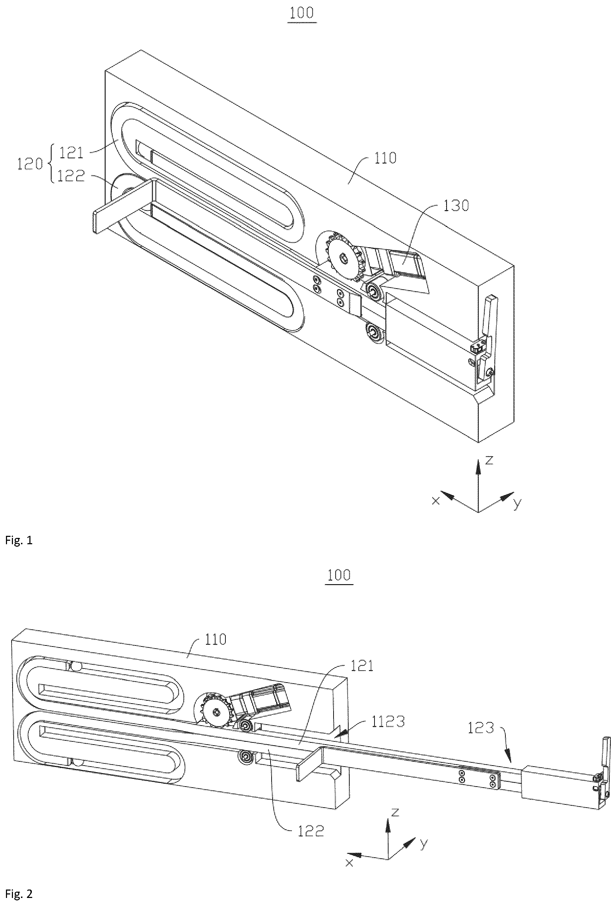

According to the foregoing conception, a picking or placing assembly is provided according to an embodiment of this application. Specifically, referring to FIG. 1 and FIG. 2, FIG. 1 shows a structure of a telescopic mechanism of a picking or placing assembly in a retracted state, and FIG. 2 shows the structure of the telescopic mechanism of the picking or placing assembly in an extended state. As shown in FIG. 1, the picking or placing assembly 100 includes: a body structure 110, a telescopic mechanism 120, and a driving mechanism 130. The telescopic mechanism 120 includes a first flexible member 121 and a second flexible member 122, and both the first flexible member 121 and the second flexible member 122 are slidably connected to the body structure 110. The driving mechanism 130 is connected to the telescopic mechanism 120, and is configured to drive the telescopic mechanism 120 to slide relative to the body structure 110. As shown in FIG. 1, when the telescopic mechanism 120 is in the retracted state relative to the body structure 110, at least part of the first flexible member 121 and at least part of the second flexible member 122 are separated from each other, and the at least part of the first flexible member 121 and the at least part of the second flexible member 122 are bent. As shown in FIG. 2, when the telescopic mechanism 120 is in the extended state relative to the body structure 110, at least part of the first flexible member 121 and at least part of the second flexible member 122 are interlocked to form a rigid arm 123, where at least part of the rigid arm 123 may be extended relative to the body structure 110. The rigid arm 123 is configured for picking up or placing of the container.

The body structure 110 may be a component, such as a housing or a mounting board, configured to provide a mounting platform for the telescopic mechanism 120 and the driving mechanism 130. The first flexible member 121 and the second flexible member 122 may both be a driven chain. The first flexible member 121 and the second flexible member 122 may be interlocked by using structures such as zipper teeth or magnets to form the rigid arm 123. In some embodiments, the driving mechanism 130 may be a motor. The motor drives the first flexible member 121 and the second flexible member 122 to move by driving a chain wheel to rotate. In some other embodiments, the driving mechanism 130 may alternatively be an electric cylinder, a gas cylinder, or a liquid cylinder, which in turn push the first flexible member 121 and the second flexible member 122 to move through a piston rod on the cylinder.

As shown in FIG. 1, when the telescopic mechanism 120 is in the retracted state, a size of the first flexible member 121 and the second flexible member 122 in a telescoping direction (a direction shown by an x-axis in the figure) can be reduced due to their respective capability of bending and deformation. Therefore, an overall size of the picking or placing assembly 100 in the telescoping direction can be reduced, making the entire structure of the picking or placing assembly 100 simple and compact.

As shown in FIG. 2, when the telescopic mechanism 120 is in the extended state, at least part of the first flexible member 121 and at least part of the second flexible member 122 are interlocked to form the rigid arm 123. That the rigid arm 123 is rigid means that there is no unsuccessful picking up or placing of the container due to significant deformation during picking up or placing of the container. That is, the rigid arm 123 is not deformed in directions shown along the x-axis, a y-axis, and a z-axis in the figure, so as to form a stable straight arm that can drive the container to move with the rigid arm. In this application, at least part of the rigid arm 123 of the body structure 110 extends out to pick up or place the container, so as to ensure safety and reliability of picking or placing operations.

It should be noted that, the extended state shown in FIG. 2 is a state in which respective segments of the first flexible member 121 and the second flexible member 122 are interlocked to form the rigid arm 123. The extended state is not limited to the state shown in FIG. 2. In another extended state, the length of the rigid arm 123 extending beyond the body structure 110 may be larger or smaller, and the specific length of the rigid arm 123 extending is not limited herein.

The manner in which the rigid arm 123 picks up or places the container may be specifically implemented by holding the container, sucking up the container with a sucker, or hooking up the container by a hook.

In the picking or placing assembly 100 provided in the embodiment of this application, the telescopic mechanism 120 including the first flexible member 121 and the second flexible member 122 slidably connected to the body structure 110 is used. Therefore, when the telescopic mechanism 120 is in the retracted state, the first flexible member 121 and the second flexible member 122 can reduce sizes in the telescoping direction by means of bending and deformation, thereby reducing the overall space occupied by the picking or placing assembly 100 in the telescoping direction, which in turn reduces widths of forks and a robot, and improving space utilization of a warehousing system. In addition, the telescopic mechanism 120 including the first flexible member 121 and the second flexible member 122 has a simple overall structure, low costs, and is easy to maintain. When the telescopic mechanism 120 extends out from the body structure 110 to perform the operation of picking up or placing the container, the rigid arm 123 formed by interlocking of the first flexible member 121 and the second flexible member 122 can reliably pick up or place the container, thereby ensuring safety of the operation.

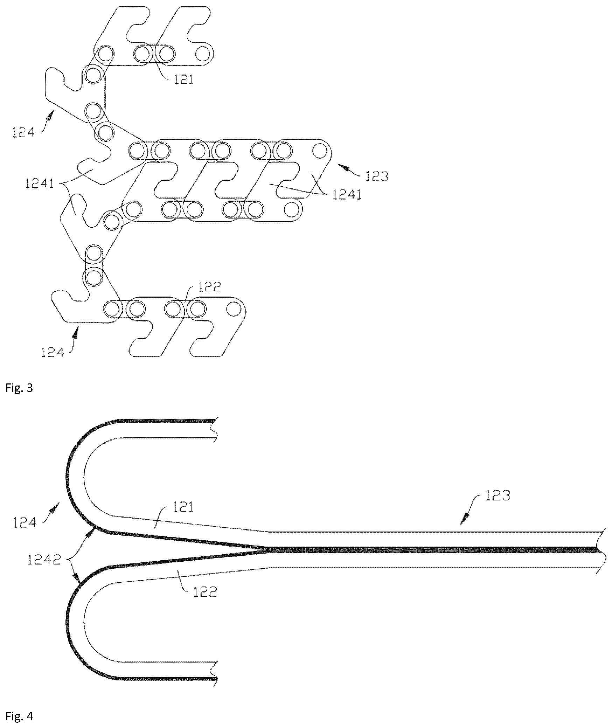

With regard to interlocked structures between the first flexible member 121 and the second flexible member 122, a specific implementation is provided in this application. Referring to FIG. 3, FIG. 3 shows a structure of the first flexible member 121 and the second flexible member 122 at an interlocked position. As shown in the figure, interlocked structures 124 are provided on a side of the first flexible member 121 and a side of the second flexible member 122 that face each other, and the first flexible member 121 and the second flexible member 122 are interlocked through cooperation between the interlocked structures 124.

In the specific embodiment shown in FIG. 3, the first flexible member 121 and the second flexible member 122 are driven chains that are bendable, and the interlocked structures 124 are zipper teeth 1241. The first flexible member 121 and the second flexible member 122 are bent in opposite directions. As shown in FIG. 3, in a direction from the ends separated from each other to the ends interlocked, the first flexible member 121 is bent downward and the second flexible member 122 is bent upward, and then are interlocked together. Specifically, at bent positions of the first flexible member 121 and the second flexible member 122, the bending of the first flexible member 121 and the second flexible member 122 drives the zipper teeth 1241 on the first flexible member 121 and the second flexible member 122 to swing. In addition, the zipper teeth 1241 on opposite sides of the first flexible member 121 and the second flexible member 122 are intermeshed in a swinging process to form an interlock, so that the interlocked first flexible member 121 and second flexible member 122 form the rigid arm 123 that has a stable structure and that is not bendable.

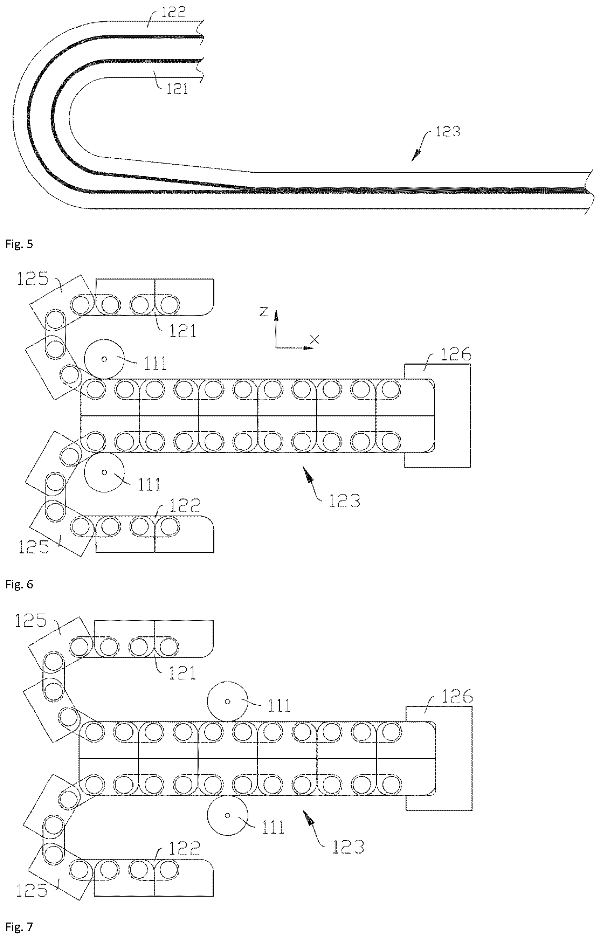

The specific embodiment shown in FIG. 4 further shows an implementation of the interlocked structures 124. As shown in the figure, the first flexible member 121 and the second flexible member 122 may be chains or metal bars that is bendable and deformable, and the interlocked structures 124 are magnets 1242. The magnets 1242 on opposite sides of the first flexible member 121 and the second flexible member 122 are attracted to each other as the magnets come into contact, causing the first flexible member 121 and the second flexible member 122 to cooperate with each other to form the rigid arm 123. A wedge structure may be provided at a position at which the first flexible member 121 and the second flexible member 122 are separated from each other, to space apart the first flexible member 121 and the second flexible member 122 that are attracted to each other, thereby achieving separation of the first flexible member 121 and the second flexible member 122. It should be noted that, in the embodiment in which the interlocked structures 124 use the magnets 1242, the first flexible member 121 and the second flexible member 122 may be bent in different directions as shown in FIG. 4, or may be bent in the same direction as shown in FIG. 5. A specific bending direction is not limited herein.

After the first flexible member 121 and the second flexible member 122 are interlocked by means of cooperation of the interlocked structures 124 on opposite sides of the first flexible member 121 and the second flexible member 122, the rigid arm 123 extending out from the body structure 110 is not easily bent or deformed, and has good stiffness, so as to implement the operation of picking up and placing the container, while ensuring the safety and reliability during the operation.

With regard to the interlock between the first flexible member 121 and the second flexible member 122, a specific implementation is provided in this application. Referring to FIG. 6, FIG. 6 shows another interlock manner between the first flexible member 121 and the second flexible member 122 according to the embodiment of this application. As shown in the figure, the first flexible member 121 and the second flexible member 122 are distributed in a direction perpendicular to the telescoping direction. For example, when the telescoping direction is a horizontal direction (an X direction in FIG. 6), the first flexible member 121 and the second flexible member 122 are distributed in a vertical direction (a Z direction in FIG. 6). Both the first flexible member 121 and the second flexible member 122 are bendable only in a direction perpendicular to a respective telescoping direction of the first flexible member 121 and the second flexible member 122. For example, both the first flexible member 121 and the second flexible member 122 are bendable only in the vertical direction. Specifically, the first flexible member 121 and the second flexible member 122 are bent respectively toward two opposite directions in the vertical direction (for example, as shown in FIG. 6, the first flexible member 121 is bent upward and the second flexible member 122 is bent downward). The first flexible member 121 and the second flexible member 122 are fixed to each other at an end facing in the extension direction (an orientation of the x-axis in FIG. 6). Specifically, when the first flexible member 121 and the second flexible member 122 slide out relative to the body structure 110, the body structure 110 is configured to fix the first flexible member 121 and the second flexible member 122 that are to be extended out at an abutment away from an end that is fixed to each other (that is, an end facing the extension direction), so that the extended first flexible member 121 and the extended second flexible member 122 are interlocked to form the rigid arm 123.

In the specific embodiment shown in FIG. 6, the first flexible member 121 and the second flexible member 122 are chains. Limiting blocks 125 are disposed on the chains. A chamfer is provided on an edge of a side of the limiting blocks 125 in the vertical direction, to provide space required for mutual rotation of adjacent limiting blocks 125, so that the adjacent limiting blocks 125 can rotate relative to each other, thereby reducing an angle between the sides of the adjacent limiting blocks 125. A right angle is provided on an edge of another side of the limiting blocks 125 in a longitudinal direction, so that when the chains are in a straight line, the adjacent limiting blocks 125 abut against each other on this side and cannot continue to rotate. In the foregoing manner, the first flexible member 121 and the second flexible member 122 are bendable only in one direction along the vertical direction (upward or downward).

Further, an end (the right end as shown in the figure) of the first flexible member 121 and an end of the second flexible member 122 that extends out of the body structure 110 may be fixed to each other by using a fixing block 126 shown in FIG. 6, or may be fixed to each other by means of cooperating with threaded fasteners, welding, limiting holes, limiting posts, and the like. The body structure 110 may interlock here, by using a guiding and limiting members 111 (such as oppositely disposed rollers or guiding blocks) on the body structure 110, the first flexible member 121 and the second flexible member 122 that are to be extended out. Therefore, since two ends of a part of the first flexible member 121 and a part of the second flexible member 122 between the guiding and limiting members 111 and the fixing block 126 are fixed, part of the first flexible member 121 and the part of the second flexible member 122 form the structurally stable rigid arm 123. It may be understood that, the body structure 110 may alternatively be provided with sliding grooves, so as to slidably guide and press on the first flexible member 121 and the second flexible member 122, causing the first flexible member 121 and the second flexible member 122 that are to be extended out to be interlocked.

It should be noted that, with regard to the foregoing embodiment in which both the first flexible member 121 and the second flexible member 122 are bendable only in one longitudinal direction, as shown in FIG. 6, the body structure 110 may secure, by using the guiding and limiting members 111, parts of the first flexible member 121 and the second flexible member 122 that are in a straight line together, once the first flexible member 121 and the second flexible member 122 are bent. Alternatively, as shown in FIG. 7, the body structure 110 may secure the first flexible member 121 and the second flexible member 122 together after they are in a straight line for a certain distance.

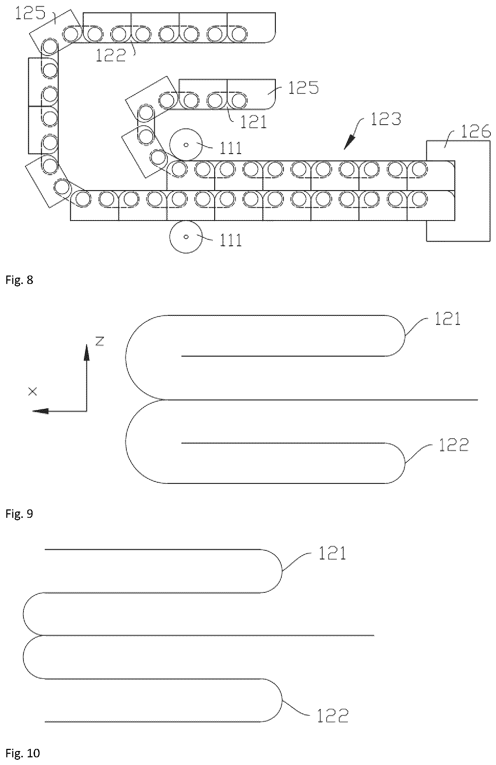

In addition, with regard to this embodiment, as shown in FIG. 6, the first flexible member 121 can only be bent upward, and the second flexible member 122 can only be bent downward. Alternatively, as shown in FIG. 8, both the first flexible member 121 and the second flexible member 122 can only be bent upward.

The first flexible member 121 and the second flexible member 122 are both disposed to be bendable only in the direction perpendicular to the telescoping direction. The end of the first flexible member 121 and the end of the second flexible member 122 facing the extension direction are fastened to each other. Further, the body structure 110 is used to fasten the abutment between a segment of the first flexible member 121 and a segment of the second flexible member 122 to be extended. In this way, the first flexible member 121 and the second flexible member 122 between the two locations that are fastened to each other form the structurally stable rigid arm 123, thereby providing reliable support for the picking or placing operations.

To sufficiently improve the extensible length of the telescopic mechanism 120 while ensuring a compact overall structure of the picking or placing assembly 100, this application further provides an implementation. Specifically, refer to FIG. 9 to FIG. 12, which show several bending forms of the first flexible member 121 and the second flexible member 122. As shown in the figure, when the telescopic mechanism 120 is in the retracted state, at least part of the first flexible member 121 and at least part of the second flexible member 122 are bent in a fold-back form.

Specifically, FIG. 9 to FIG. 12 are merely several typical configurations of the first flexible member 121 and the second flexible member 122 in the fold-back form according to this application. Some simple variations made on such a basis shall fall within the scope of this application.

At least part of the first flexible member 121 and at least part of the second flexible member 122 are bent in the fold-back form. In this way, an area occupied by the first flexible member 121 and the second flexible member 122 in the telescoping direction (the direction shown by the x-axis in FIG. 9) and the vertical direction (the direction shown by the z-axis in FIG. 9) can be reduced, thereby reducing the overall size of the picking or placing assembly 100, and making the picking or placing assembly more compact. In addition, since at least part of the first flexible member 121 and at least part of the second flexible member 122 could be bent in the fold-back form, the total length of the first flexible member 121 and the total length of the second flexible member 122 could be sufficiently increased. Therefore, the first flexible member 121 and the second flexible member 122 may extend out longer relative to the body structure 110, thereby implementing the operation of picking up and placing the large-volume container.

To fully use the size of the picking or placing assembly 100 in the telescoping direction, this application further provides an implementation as shown in FIG. 9, when the telescopic mechanism 120 is in the retracted state, at least part of the first flexible member 121 and at least part of the second flexible member 122 are bent in opposite directions.

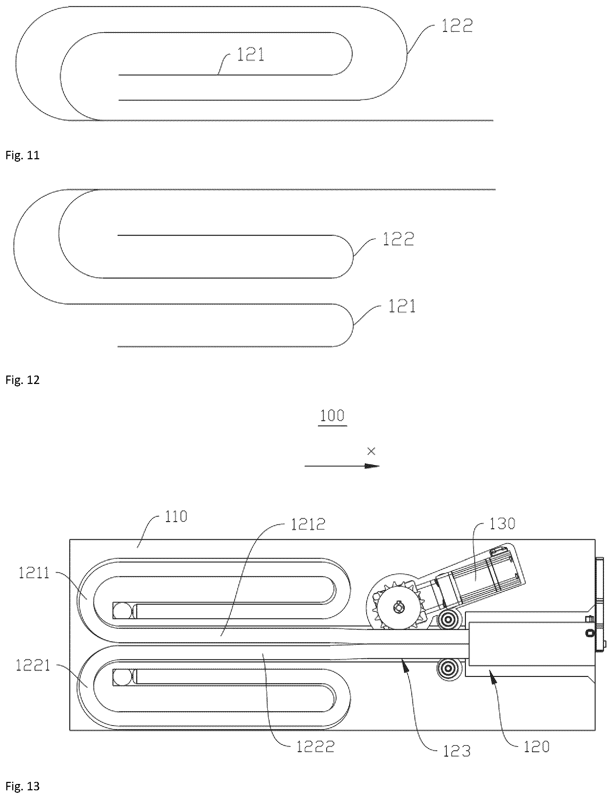

Compared with that at least part of the first flexible member 121 and at least part of the second flexible member 122 are bent in the same direction as shown in FIG. 11 or 12, as at least part of the first flexible member 121 and at least part of the second flexible member 122 are bent in opposite directions, the first flexible member 121 and the second flexible member 122 are bendable from a same position in the telescoping direction. In this way, the first flexible member 121 does not need to keep away from the second flexible member 122 or the second flexible member 122 does not need to keep away from the first flexible member 121 during bending, thereby achieving full space utilization in the telescoping direction. When a size in the telescoping direction is fixed, both the first flexible member 121 and the second flexible member 122 can have a relatively long length.

Further, referring to FIG. 13, FIG. 13 shows a structure of the picking or placing assembly 100 when the telescopic mechanism 120 is in the retracted state. As shown in the figure, in some embodiments of this application, the first flexible member 121 is provided with a first segment 1211 and a second segment 1212 that are connected, and the second flexible member 122 is provided with a third segment 1221 and a fourth segment 1222 that are connected. When the telescopic mechanism 120 is in the retracted state, the first segment 1211 and the third segment 1221 are bent, and the first segment 1211 and the third segment 1221 are bent in opposite directions. At least part of the second segment 1212 and at least part of the fourth segment 1222 are straight, and at least part of the second segment 1212 and at least part of the fourth segment 1222 are interlocked to form the rigid arm 123.

Specifically, when the first flexible member 121 is a chain, the first segment 1211 and the second segment 1212 may be connected to each other through a pivot in the chain. When the first flexible member 121 is a structure such as a metal strip that is bendable and deformable, the first segment 1211 and the second segment 1212 may be connected to each other into an integral structure. The same is for the second flexible member 122. Details are not described herein again.

In the retracted state, the first segment 1211 and the third segment 1221 are bent, and the first segment 1211 and the third segment 1221 are bent in opposite directions. Therefore, the size of the first flexible member 121 and the second flexible member 122 in the telescoping direction (the direction shown by the x-axis in FIG. 13) can be reduced, thereby reducing a volume of the picking or placing assembly 100. At least part of the second segment 1212 and at least part of the fourth segment 1222 are straight, and at least part of the second segment 1212 and at least part of the fourth segment 1222 are interlocked to form the rigid arm 123. In this way, during the picking or placing operations, the rigid arm 123 formed by the interlocked at least part of the second segment 1212 and at least part of the fourth segment 1222 may extend out of the body structure 110 immediately for picking up or placing the container, thereby ensuring efficiency of the operation.

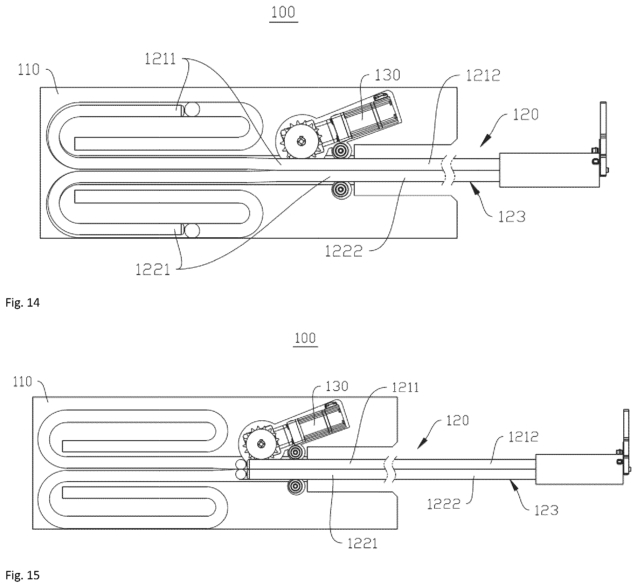

Further, referring to FIG. 14, FIG. 14 shows a structure of the picking or placing assembly 100 at a specific moment when the telescopic mechanism 120 is in the extended state. As shown in the figure, in some embodiments, when the telescopic mechanism 120 is in the extended state, the part of the second segment 1212 and the part of the fourth segment 1222 that are interlocked gradually increase. In some embodiments, the second segment 1212 and the fourth segment 1222 may be entirely interlocked. At least part of the first segment 1211 and at least part of the third segment 1221 are straight. In some embodiments, at least part of the first segments 1211 and at least part of the third segments 1221 are interlocked, and the at least part of the first segments 1211 and the at least part of the third segments 1221 that are interlocked together with the second segment 1212 and the fourth segment 1222 that are entirely interlocked jointly form the rigid arm 123.

In the extended state, the second segment 1212 and the fourth segment 1222 are entirely interlocked, and at least part of the first segment 1211 and at least part of the third segment 1221 are interlocked, so that the rigid arm 123 formed by the at least part of the first segment 1211 and the at least part of the third segment 1221 that are interlocked together with the second segment 1212 and the fourth segment 1222 that are entirely interlocked has a relatively long length, thereby implementing picking up or placing of the container.

Further, referring to FIG. 15, FIG. 15 shows a structure of the picking or placing assembly 100 at another moment when the telescopic mechanism is in the extended state. As shown in the figure, in some embodiments, when the telescopic mechanism 120 is in the extended state, the first segment 1211 and the third segment 1221 are straight, the first segment 1211 and the third segment 1221 are entirely interlocked, and the first segment 1211 and the third segment 1221 that are entirely interlocked together with the second segment 1212 and the fourth segment 1222 that are entirely interlocked jointly form the rigid arm 123.

In the extended state, the rigid arm 123, formed by the first segment 1211 and the third segment 1221 that are entirely interlocked together with the second segment 1212 and the fourth segment 1222 that are entirely interlocked, may extend beyond the body structure 110 by a very long length in the telescoping direction, enabling the reliable operation of picking up and placing the large-volume container or the container in the deep position. In addition, in the retracted state, the size of the picking or placing assembly 100 in the telescoping direction is still relatively small, and the picking or placing assembly 100 does not occupy excessively large space in the warehouse, thereby improving space utilization of the warehouse.

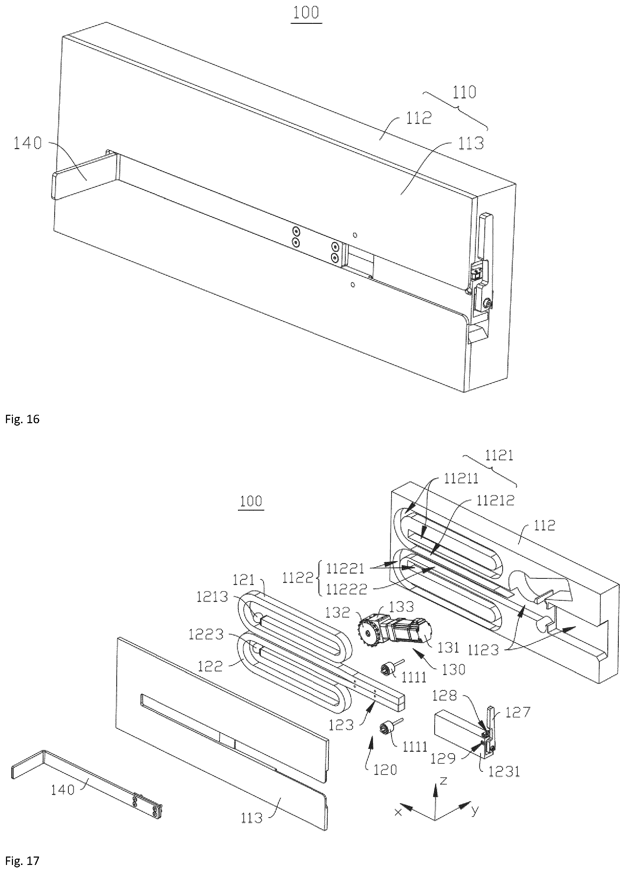

With regard to mounting the telescopic mechanism 120 onto the body structure 110, this application provides a specific implementation. Referring to FIG. 16 and FIG. 17, FIG. 16 shows a three-dimensional structure of the picking or placing assembly 100, and FIG. 17 shows an exploded structure of the picking or placing assembly 100. As shown in the figure, the body structure 110 includes a base body 112 and a cover 113. A first sliding groove 1121, a second sliding groove 1122 and a cooperation groove 1123 are provided on a side of the base body 112. The first sliding groove 1121 includes a first curved groove 11211 and a first straight groove 11212 communicating with each other, and the second sliding groove 1122 includes a second curved groove 11221 and a second straight groove 11222 communicating with each other. The first straight groove 11212 and the second straight groove 11222 extend in the telescoping direction (the direction shown by the x-axis in FIG. 17). Both an end of the first straight groove 11212 and an end of the second straight groove 11222 facing in the extension direction (a direction opposite to the orientation of the x-axis in FIG. 17) communicate with the cooperation groove 1123. An end of the cooperation groove 1123 facing the extension direction communicates with the outside of the base body 112. The first flexible member 121 may be slidably disposed in the first sliding groove 1121, and the second flexible member 122 may be slidably disposed in the second sliding groove 1122.

With reference to FIG. 1 and FIG. 17, when the telescopic mechanism 120 is in the retracted state, at least part of the first flexible member 121 is disposed in the first curved groove 11211, and at least part of the second flexible member 122 is disposed in the second curved groove 11221. The first flexible member 121 located in the first curved groove 11211 is separated from the second flexible member 122 located in the second curved groove 11221.

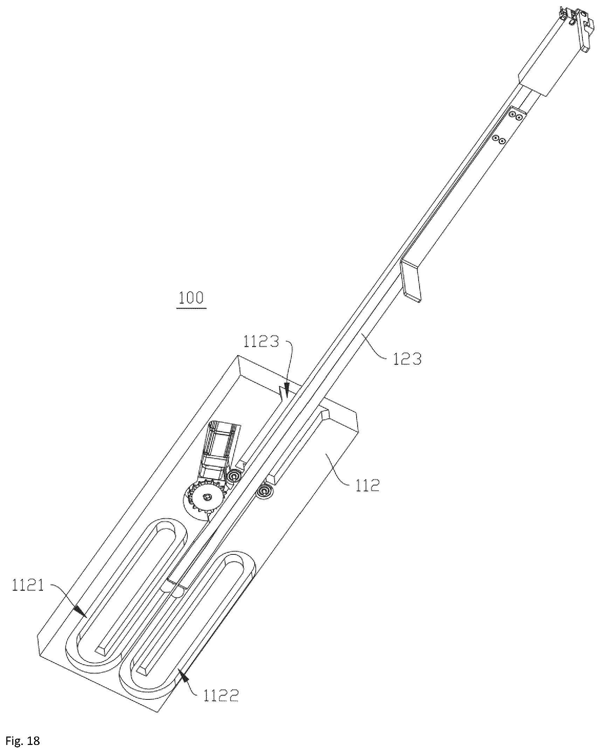

Still referring to FIG. 17, and further referring to FIG. 2 and FIG. 18, FIG. 2 and FIG. 18 respectively show structures of the telescopic mechanism 120 in the extended state at two moments. As shown in the figure, when the telescopic mechanism 120 is in the extended state, both the first flexible member 121 and the second flexible member 122 move toward the extension direction. The first flexible member 121 and the second flexible member 122 that enter and pass through the cooperation groove 1123 are interlocked to form the rigid arm 123. At least part of the rigid arm 123 extends out of the base body 112 from the end of the cooperation groove 1123. The cover 113 is disposed on a side of the base body 112 on which the first sliding groove 1121 is located.

It may be understood that, the first flexible member 121 and the second flexible member 122 that enter and pass through the cooperation groove 1123 are interlocked to form the rigid arm 123. This can be achieved by a small part of the first flexible member 121 and a small part of the second flexible member 122 entering the cooperation groove 1123 and being interlocked to form the rigid arm 123, as shown in FIG. 2. Alternatively, this can be achieved by a large part of the first flexible member 121 and a large part of the second flexible member 122 entering the cooperation groove 1123 and being interlocked to form the rigid arm 123, as shown in FIG. 18. However, in another embodiment, alternatively, this can be achieved by all of the first flexible members 121 and all of the second flexible members 122 entering the cooperation groove 1123 and being interlocked to form the rigid arm 123. Alternatively, this can be achieved by all of the first flexible members 121 and part of the second flexible members 122 entering the cooperation groove 1123 to form the rigid arm 123. Alternatively, this can be achieved by part of the first flexible members 121 and all of the second flexible members 122 entering the cooperation groove 1123 to form the rigid arm 123.

As the first sliding groove with the first curved groove 11211 and the first straight groove 11212 and the second sliding groove with the second curved groove 11221 and the second straight groove 11222 are disposed on the base body 112, the first flexible member 121 and the second flexible member 122 can be limited to slide separately through the first sliding groove 1121 and the second sliding groove 1122, so that the first flexible member 121 and the second flexible member 122 separately slide in the extension direction of the first sliding groove 1121 and the second sliding groove 1122. In addition, in the retracted state, it can be ensured that extended shapes of the first flexible member 121 and the second flexible member 122 are respectively the same as extended shapes of the first sliding groove 1121 and the second sliding groove 1122, thereby ensuring that in the retracted state, an overall size of the base body 112 in the telescoping direction is reduced, and an overall structure of the picking or placing assembly 100 is simple and compact. The cover 113 is disposed on a side of the base body 112 on which the first sliding groove 1121 is located, to cover the first sliding groove 1121 and the second sliding groove 1122, to limit positions of the first flexible member 121 and the second flexible member 122 in a transverse direction (the direction shown by the y-axis in FIG. 17) perpendicular to the telescoping direction, thereby ensuring precision and stability during sliding of the first flexible member 121 and the second flexible member 122.

Further, the sliding groove for accommodating the flexible member is provided on the base body 112, and the cover 113 covers the sliding groove. During assembly, the first flexible member 121 and the second flexible member 122 are separately disposed in the first sliding groove 1121 and the second sliding groove 1122. Then, the cover 113 covers at notches of the first sliding groove 1121 and the second sliding groove 1122, and is further fixedly connected to the base body 112. In this way, the picking or placing assembly 100 is assembled. The entire process is easy to operate, and is easy and energy-saving.

It may be understood that, the foregoing embodiment is only a way in which the body structure 110 limits and slidably guides the first flexible member 121 and the second flexible member 122. In another embodiment, Alternatively, a structure such as a guiding slide rail slidably connected to the first flexible member 121 and the second flexible member 122 is provided on the body structure 110, thereby mounting, limiting, and slidably guiding the first flexible member 121 and the second flexible member 122 could be achieved by the guiding slide rail.

To prevent the first flexible member 121 from getting stuck when the first flexible member 121 abuts against side walls of the first curved groove 11211 with a larger curvature during the sliding process, this application further provides an implementation specifically shown in FIG. 17, a first guide ball 1213 is movably connected to an end of the first flexible member 121 that is away from the cooperation groove 1123 in the extension direction of the first flexible member 121, and the first guide ball 1213 is configured to move with the first flexible member 121 in the first sliding groove 1121.

To prevent the second flexible member 122 from getting stuck when the second flexible member 122 abuts against side walls of the second curved groove 11221 with a larger curvature during the sliding process, this application further provides an implementation, specifically shown in FIG. 17, a second guide ball 1223 is movably connected to an end of the second flexible member 122 that is away from the cooperation groove 1123 in the extension direction of the second flexible member 122, and the second guide ball 1223 is configured to move with the second flexible member 122 in the second sliding groove 1122.

Specifically, the first guide ball 1213 may be a roller. The first guide ball 1213 may only roll with the first flexible member 121 in the first sliding groove 1121 along a fixed pivot. Alternatively, the first guide ball 1213 may be a universal wheel, a universal ball, or the like. Therefore, the first guide ball 1213 may voluntarily change a direction of the pivot in the first sliding groove 1121 to roll with a force bearing condition of the first guide ball 1213, ensuring that the first flexible member 121 slides smoothly and flexibly in the first sliding groove 1121. The same is for the second guide ball 1223. Details are not described herein again.

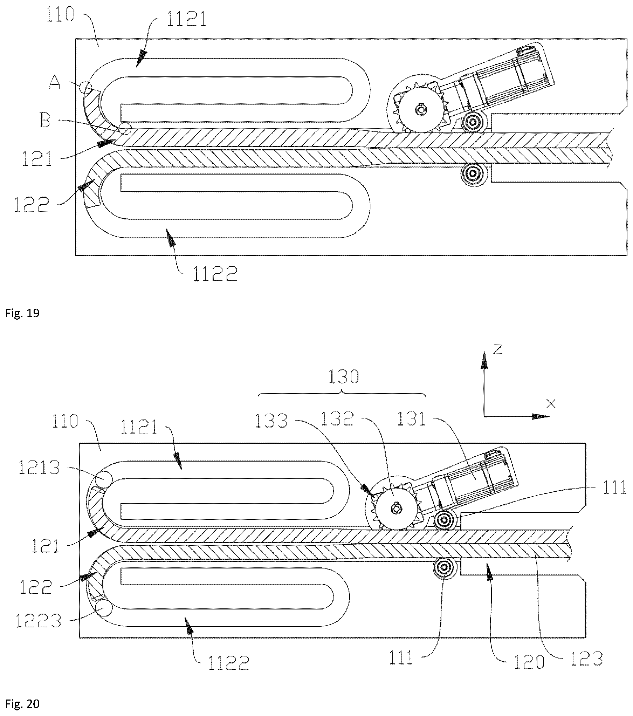

To facilitate the understanding of the working principle of the first guide ball 1213 and the second guide ball 1223, FIG. 19 and FIG. 20 schematically show this application. In FIG. 19 and FIG. 20, section lines are added to the first flexible member 121 and the second flexible member 122, to facilitate observation of the abutment between the flexible member and the sliding groove. As shown in FIG. 19, when an inner end of the first flexible member 121 slides to a position with a relatively large curvature in the first sliding groove 1121, the first flexible member 121 may be affected by a sliding tendency or a force of deformation recovering of the first flexible member 121, resulting in generating an interaction force between the end and an inner wall of the first sliding groove 1121 at a region A circled in FIG. 19. The interaction force, in combination with an interaction force that may be resulted between the first flexible member 121 and the inner wall of the first sliding groove 1121 at another position (for example, a region B circled in FIG. 19), causes the first flexible member 121 prone to be stuck. Consequently, the first flexible member 121 cannot slide continuously, affecting the normal picking or placing operations. The same is for the second flexible member 122. Details are not described herein again.

Based on this, referring to FIG. 20, as shown in the figure, as the first guide ball 1213 is disposed at the inner end of the first flexible member 121, when the end slides to the position with a relatively large curvature in the first sliding groove 1121, the first guide ball 1213 is in contact with the inner wall of the first sliding groove 1121. By using the feature of sensitive movement of the first guide ball 1213, the first flexible member 121 can slide smoothly in the first sliding groove 1121, so as to ensure smooth progress of the picking or placing operations.

To ensure that the first flexible member 121 and the second flexible member 122 are interlocked to form the stable rigid arm 123, this application further provides an implementation. Specifically, referring to FIG. 20, guiding and limiting members 111 are provided on the body structure 110, and the guiding and limiting members 111 are configured to abut a side of at least part of the first flexible member 121 and a side of at least part of the second flexible member 122 that are opposite when the telescopic mechanism 120 slides relative to the body structure 110, so that at least part of the first flexible member 121 and at least part of the second flexible member 122 are interlocked to form the rigid arm 123, and the rigid arm 123 telescopically slides in a fixed telescoping direction (the direction shown by the x-axis in the figure).

With the guiding and limiting members 111 abutting the side of the first flexible member 121 and the side of the second flexible member 122 that are opposite, it can be ensured that the rigid arm 123 formed by the interlocked first flexible member 121 and second flexible member 122 to be stable and reliable. In addition, the guiding and limiting members 111 can guide the formed rigid arm 123, to ensure straightness during telescopically sliding of the rigid arm 123, thereby ensuring accuracy and reliability of picking up or placing the container.

For a specific structure of the guiding and limiting members 111, this application provides an implementation. Continue to refer to FIG. 20, and refer to FIG. 17 again, the guiding and limiting members 111 include limiting wheels 1111 rotatably connected to the body structure 110. The limiting wheels 1111 are configured to cooperate with two sides of the rigid arm 123, so that the limiting wheels 1111 rotate with sliding of the rigid arm 123.

In the specific embodiment shown in FIG. 17, the limiting wheels 1111 are disposed on two sides of the rigid arm 123 facing away from each other, and are rotatably connected to the body structure 110 through the pivot. The limiting wheels 1111 cooperate with the rigid arm 123 by means of a frictional force, so that the limiting wheels 1111 rotate as the rigid arm 123 slides.

It may be understood that, in the embodiment in which the first flexible member 121 and the second flexible member 122 are chains, the limiting wheels 1111 may alternatively chain wheels. Teeth on the chain wheels reliably cooperate with gaps on the chains, thereby ensuring that the limiting wheels 1111 reliably limit and guide the first flexible member 121 and the second flexible member 122.

With the limiting wheels 1111 limiting and guiding the first flexible member 121 and the second flexible member 122, the limiting wheels 1111 may rotate with sliding of the rigid arm 123, thereby preventing large frictional force between the guiding and limiting members 111 and the first flexible member 121 and the second flexible member 122 from affecting a telescoping speed of the rigid arm 123, thereby ensuring efficiency of the picking or placing operations.

To improve compactness of the overall structure of the picking or placing assembly 100, this application further provides an implementation. Specifically, referring to FIG. 20, the first flexible member 121 and the second flexible member 122 are disposed in mirror symmetry relative to a straight line parallel to the telescoping direction (the direction shown by the x-axis in the figure).

With the first flexible member 121 and the second flexible member 122 being disposed in mirror symmetry, it can be ensured that the first flexible member 121 and the second flexible member 122 both have a relatively long length. The first flexible member 121 and the second flexible member 122 are of equal length, thereby fully increasing an extensible length of the rigid arm 123, and implementing picking up or placing of the large-volume container. In addition, the overall compactness and aesthetics of the picking or placing assembly 100 may be improved.

With regard to a structure of the driving mechanism 130, this application provides a specific implementation. Referring to FIG. 17 and FIG. 20 again, the driving mechanism 130 includes a driving member 131 and a driven wheel 132. The driving member 131 is connected to the first flexible member 121 and/or the second flexible member 122 through the driven wheel 132. The driving member 131 is configured to drive the telescopic mechanism 120 to slide through the driven wheel 132.

It may be understood that, in the embodiment in which at least part of the first flexible member 121 and at least part of the second flexible member 122 are already interlocked in the telescoping state, the driving mechanism 130 may drive only the first flexible member 121 or only the second flexible member 122 to slide, so that in a sliding process, one of the flexible members drives, by using the interlocked structure, the other flexible member to move. However, in a case in which all of the first flexible member 121 and all of the second flexible member 122 are separated from each other in the telescoping state, the driving mechanism 130 may be disposed on the first flexible member 121 and the second flexible member 122. Therefore, when the driving mechanism 130 works, the first flexible member 121 and the second flexible member 122 may be simultaneously driven to slide. Alternatively, two driving mechanisms 130 may be provided to separately drive the first flexible member 121 and the second flexible member 122 to slide.

The telescopic mechanism 120 is driven to slide by using the driving member 131 and the driven wheel 132, enabling movement of the first flexible member 121 and the second flexible member 122 relative to the body structure 110. Therefore, the first flexible member 121 and the second flexible member 122 can be smoothly interlocked to form the rigid arm 123 for the picking or placing operations.

Further, in some embodiments, a driven cooperation structure is provided on at least one of the side of the first flexible member 121 and the side of the second flexible member 122 that are opposite. Driven teeth are provided along periphery of the driven wheel 132, so that when the driven wheel 132 rotates, the driven wheel is successively connected to different positions of the driven cooperation structure through the driven teeth, driving the telescopic mechanism 120 to slide.

Specifically, when the first flexible member 121 and the second flexible member 122 are chains, the driven cooperation structure may be a gap that is on chains and that can mesh with the driven teeth. When the first flexible member 121 and the second flexible member 122 are flexible metal members, the driven cooperation structure may be a gear rack meshing with driven teeth.

With the driven cooperation structure disposed on at least one of the side of the first flexible member 121 and the side of the second flexible member 122 that are opposite, the driving mechanism 130 can be disposed at a position at which the first flexible member 121 and the second flexible member 122 are to be interlocked or are already interlocked when being extended. Further, as shown in FIG. 20, the size of the picking or placing assembly 100 in the telescoping direction (the direction shown by the x-axis) and the longitudinal direction (the direction shown by the z-axis) can be sufficiently reduced, thereby ensuring compactness of the overall structure.

To further reduce the size of the picking or placing assembly 100, this application further provides an implementation. Specifically, referring to FIG. 17 and FIG. 20 again, an output axis of the driving member 131 is connected to the driven wheel 132 through a right-angle reducer 133, so that a plane in which the output axis of the driving member 131 is located (a plane in which an x-axis and a z-axis are located in the figure) is coplanar with or parallel to a plane in which the rigid arm 123 is located.

It may be understood that, without using the right-angle reducer 133, the driving member 131 needs to be mounted and fixed in the direction shown by the y-axis in FIG. 17. That is, the output axis of the driving member 131 needs to be mounted and fixed in the direction shown by the y-axis in FIG. 17. Because a size of the driving member 131 in an axial direction is relatively long, the overall size of the picking or placing assembly 100 along the y-axis is thicken after being mounted, thereby affecting the size of the fork and the size of the robot.

Based on this, with the output axis of the driving member 131 connected to the driven wheel 132 through the right-angle reducer 133, a driving direction may be changed, so that the driving member 131 may be mounted and arranged along the plane on which the rigid arm 123 is located. Therefore, the overall size of the picking or placing assembly 100 in the direction shown by the y-axis can be reduced, ensuring that the picking or placing assembly 100 is light and compact. Further, the overall sizes of the fork and the robot to which the picking or placing assembly 100 is applied are relatively small, facilitating improving space utilization of the warehouse.

In the embodiment in which the base body 112 and the cover 113 are disposed on the body structure 110 shown in FIG. 17, an installation groove may be provided on the base body 112 to accommodate the driving mechanism 130, thereby implementing installation and fixing of the driving mechanism 130 on the body structure 110. In addition, the cover 113 may cover on the installation groove in which the driving mechanism 130 is located, to protect the driving mechanism 130, and ensure a stable operation of the driving mechanism 130.

With regard to a manner in which the rigid arm 123 pulls the container, this application provides an embodiment. Specifically, referring to FIG. 17, the telescopic mechanism 120 further includes a pulling member 127 rotatably provided on an end of the rigid arm 123 facing in the extension direction (a direction opposite to the x-axis in the figure). The pulling member 127 is configured to rotate when the rigid arm 123 is in the extended state and to protrude from a side of the rigid arm 123, thereby pulling the container for movement during the rigid arm 123 being retracted. A limiting sensor is disposed on the rigid arm 123. The limiting sensor is configured to detect a rotation angle of the pulling member 127, and to control the pulling member 127 to stop rotating after the pulling member 127 rotates into position.

Specifically, as shown in FIG. 17, a mounting part 1231 may be provided at an end of the rigid arm 123, and the pulling member 127 may be a pull rod that is rotatably connected to the mounting part 1231. A driving structure may be disposed on the mounting part 1231 to drive the pulling member 127 to automatically rotate. The limiting sensor may be an angle sensor, so as to control the driving structure on the mounting part 1231 to operate and stop by detecting a rotation angle of the pulling member 127.

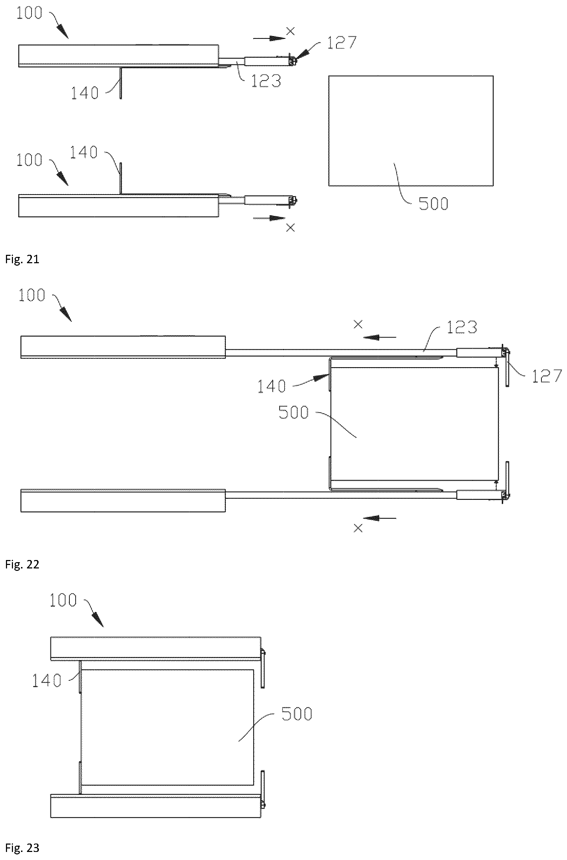

With regard to a principle of pulling the container by the pulling member 127, referring to FIG. 21 and FIG. 23, several states in a process starting from an initial retracted state to removing the container by the picking or placing assembly 100 are sequentially shown. It should be noted that, in the picking or placing processes, two picking or placing assemblies 100 may cooperate to perform the operation. Alternatively, a single picking or placing assembly 100 may be used to perform the operation. In FIG. 21 to FIG. 23, descriptions are provided by using an example in which two picking or placing assemblies 100 cooperate to perform the operation.

First, as shown in FIG. 21, when the picking or placing assembly 100 reaches a designated picking position, the first flexible member 121 and the second flexible member 122 extend and slide relative to the body structure 110. The rigid arm 123 formed by the first flexible member 121 and the second flexible member 122 extends in the direction shown by the x-axis in the figure. In a process in which the rigid arm 123 extends, the pulling member 127 rotates to an upward or downward position (that is, the pulling member 127 rotates to be perpendicular to a plane shown in FIG. 21). Next, after an end of the rigid arm 123 extends beyond a back of a container 500, an end of the pulling member 127 rotates toward a side of the container 500 to a state shown in FIG. 22. Next, the first flexible member 121 and the second flexible member 122 retract and slide relative to the body structure 110, to move the rigid arm 123 toward the direction of the x-axis in FIG. 22. Further, the pulling member 127 drives the container 500 to move, finally forming state shown in FIG. 23, and completing the operation of picking the container 500.

With the pulling member 127 rotatably disposed on the end of the rigid arm 123 facing in an extension direction, after the rigid arm 123 extends, the container may be pulled by rotation of the pulling member 127, thereby implementing the operation of picking the container. Further, with the limiting sensor disposed on the rigid arm 123, the rotation angle of the pulling member 127 can be detected, ensuring rotation accuracy of the pulling member 127, and ensuring the stable and reliable operation of picking the container and improving safety of the operation.

To further improve automation of the operation, this application further provides an implementation. Specifically, referring to FIG. 17 again, a position detection sensor 128 is provided at an end of the rigid arm 123, and the position detection sensor 128 is configured to detect a pose of the container.

Specifically, in an embodiment in which the mounting part 1231 is disposed at an end of the rigid arm 123, the position detection sensor 128 may be disposed on the mounting part 1231. Therefore, the pulling member 127, a driving structure of the pulling member 127, the limiting sensor, and the position detection sensor 128 are all integrated on the mounting part 1231 and form a modular structure, facilitating assembly of the picking or placing assembly 100.

With the position detection sensor 128 for detecting the pose of the container is disposed at the end of the rigid arm 123, the pose of the container can be detected. Further, an overall orientation of the picking or placing assembly 100 can be controlled by using detection data. In this way, the rigid arm 123 may be parallel to or nearly parallel to the side wall of the container during the operation, thereby ensuring the successful picking or placing operations.

Further, referring to FIG. 17 again, in some embodiments of this application, a container picking or placing sensor 129 is provided at a side of the rigid arm 123, and the container picking or placing sensor 129 is configured to detect whether there is a container on the side of the rigid arm 123.

As shown in FIG. 17, in the embodiment in which the mounting part 1231 is disposed at an end of the rigid arm 123, the container picking or placing sensor 129 may be integrated into the interior of the mounting part 1231. The container picking or placing sensor 129 performs a detection through an opening provided at the side of the mounting part 1231.

With the container picking or placing sensor 129 disposed at the side of the rigid arm 123, it is possible to determine whether the rigid arm 123 is extended in place during the operation of picking by detecting whether there is a container on the side of the rigid arm 123. After extending in place, the rigid arm 123 can be controlled to pick up the container.

Specifically, the embodiment shown in FIG. 22 in which the pulling member 127 is disposed at the end of the rigid arm 123 facing in the extension direction is used as an example. As shown in the figure, a dashed arrow indicates a detection direction of the container picking or placing sensor 129. When the container picking or placing sensor 129 detects the container on the side of the rigid arm 123, the rigid arm 123 stops extending. In this way, the pulling member 127 rotatably extends, and then the rigid arm 123 retracts to pull the container.

With regard to a manner of placing the container, this application provides an implementation. Specifically, referring to FIG. 16 and FIG. 17 again, the picking or placing assembly 100 further includes a pushing member 140 provided at a side of the rigid arm 123. The pushing member 140 is configured to push the container for movement during the rigid arm 123 being extended.

Specifically, a manner in which the pushing member 140 pushes the container to perform the operation of placing is reverse to the manner of the picking operation in FIG. 21 to FIG. 23. That is, the states in FIG. 23, FIG. 22, to FIG. 21 are performed sequentially. Specific principles are not described herein again.

With the pushing member 140 disposed on the side of the rigid arm 123, the rigid arm 123 can push the container to perform the operation of placing during extended. In addition, the structure is simple and the assembly is easy.

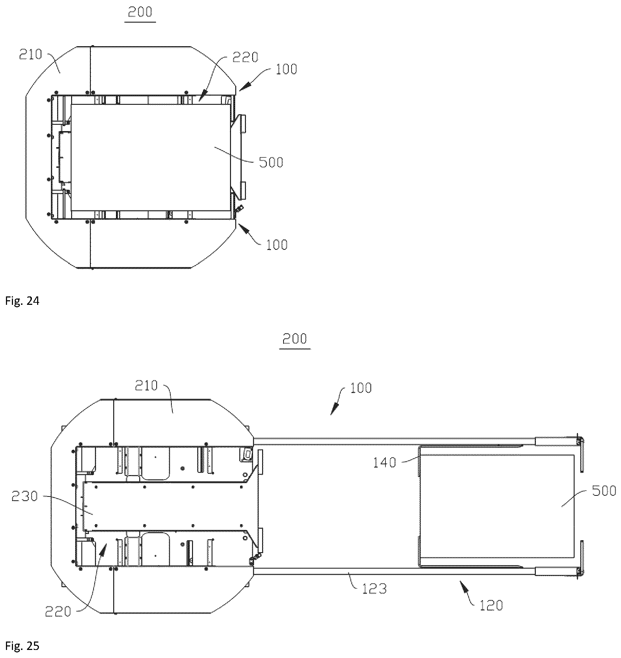

According to another aspect of the embodiments of this application, a fork is further provided. Specifically, referring to FIG. 24 and FIG. 25, schematic structural diagrams of a picking or placing assembly in the fork when the fork is in a retracted state and in an extended state are respectively shown. As shown in the figure, the fork 200 includes a housing 210 and the picking or placing assembly 100 in any one of the foregoing embodiments. There are two picking or placing assemblies 100 and the two picking or placing assemblies 100 are disposed on two opposite sides of the housing 210. An area between the two picking or placing assemblies 100 on the housing 210 forms a container storage area 220. The two picking or placing assemblies 100 are configured to pull a container into the container storage area 220 and/or push a container out of the container storage area 220.

A manner in which the fork 200 pulls the container or pushes the container by using the picking or placing assemblies 100 is the same as the manner in FIG. 21 to FIG. 23. Details are not described herein again.

In the fork 200 provided in the embodiment of this application, the picking or placing assemblies 100 that are opposite on two sides of the housing 210 use a telescopic mechanism 120. The telescopic mechanism 120 includes the first flexible member 121 and the second flexible member 122 that are slidably connected to the body structure 110. Therefore, when an operation of picking up or placing a container is not performed, that is, when the telescopic mechanism 120 is in the retracted state, the first flexible member 121 and the second flexible member 122 can reduce sizes in a telescoping direction by means of bending and deformation, thereby reducing the overall space occupied by the picking or placing assemblies 100 in the telescoping direction, which in turn reduces a width of the fork, and improving space utilization of a warehousing system.

For a structure in which the fork 200 carries the container, this application further provides an implementation. Specifically, referring to FIG. 24 and FIG. 25, the fork 200 further includes a tray 230. The tray 230 is disposed in the container storage area 220. The tray 230 is configured to carry a container 500. The tray 230 is slidably connected to the housing 210 in an extension direction of the rigid arm 123. A sliding travel of the tray 230 is less than a sliding travel of the telescopic mechanism 120. The tray 230 is configured to cooperate with the telescopic mechanism 120 during sliding to perform picking up and placing of the container 500.

In the specific embodiment shown in FIG. 25, the tray 230 may be slidably connected to the housing 210 through a slide rail at the bottom of the housing 210. A limiting part is provided on the slide rail, so that when the tray 230 slides to a maximum travel, the tray 230 is interlocked with the limiting part and cannot slide forward any more.

During a picking operation, the telescopic mechanism 120 moves to a position shown in FIG. 25, and the tray 230 moves rightward to the maximum travel (in some embodiments, the tray 230 slides out only by a relatively small distance, so as to reduce a gap between the tray and the rack, and prevent the container from falling from the gap or getting stuck at the gap). In this case, the telescopic mechanism slides in a retracting direction and drives the container to move, to pull the container to the tray 230. Then, the tray 230 and the telescopic mechanism 120 move together to be retracted, to transfer the container to the container storage area 220.

During an operation of placing, the tray 230 and the telescopic mechanism 120 slide in the extension direction in the state shown in FIG. 24 and drive the container on the tray 230 to slide accordingly. The tray 230 stops sliding after sliding to the maximum travel, while the telescopic mechanism 120 continues to slide in the extension direction, to push the container on the tray 230 to a target position. The target position may be, for example, a container platform on the rack. In addition, during the picking or placing operations, when the tray 230 slides out, an end of the tray toward the extension direction may abut against an outer edge of the container platform on the rack, thereby ensuring that an overall structure of the fork 200 is stable during picking up or placing the container, and enabling the smooth picking or placing operations.

With the tray 230 slidably disposed on the housing 210, and the travel of the tray 230 being set to be less than a travel of the telescopic mechanism 120, it facilitates smooth and stable picking or placing operations, thereby effectively ensuring safety of the operation.

Further, still referring to FIG. 25, the picking or placing assembly 100 further includes a pushing member 140 provided at a side surface of the rigid arm 123. The pushing member 140 is configured to push the tray 230 to be withdrawn during the rigid arm 123 retracted.

Specifically, an abutted block may be disposed at a rear end of the tray 230, so that in a process in which the rigid arm 123 moves to be retracted, the pushing member 140 is abutted against the abutted block and applies a force to the abutted block, thereby the rigid arm 123 driving the tray 230 move to be retracted.

The tray 230 is pushed to be withdrawn by using the pushing member 140 at a side of the rigid arm 123. There is no need to provide a separate component to drive the tray 230 to slide. It is beneficial for reducing manufacturing costs of the fork 200 and reducing an overall volume of the fork 200, thereby ensuring higher space utilization of the warehousing system.

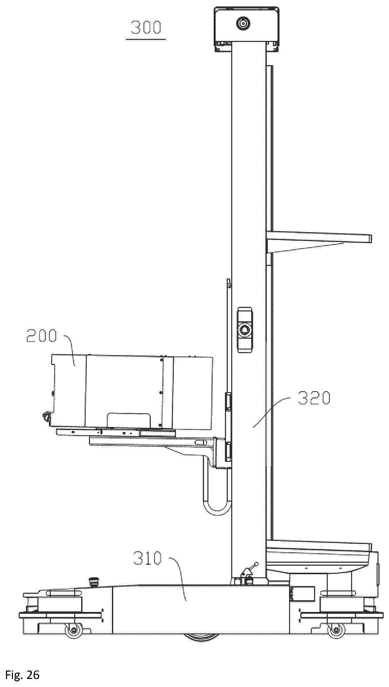

According to another aspect of the embodiments of this application, a robot is further provided. Specifically, referring to FIG. 26, FIG. 26 shows a structure of the robot. As shown in the figure, the robot 300 includes a chassis 310, a vertical post 320, and the fork 200 in any one of the foregoing embodiments. The vertical post 320 is disposed on the chassis 310, and the fork 200 can be disposed on the vertical post 320, and be capable of lifting or lowering relative to the vertical post 320.

In the robot 300 provided in the embodiment of this application, the picking or placing assemblies 100 that are opposite on two sides of the housing 210 of the fork 200 use a telescopic mechanism 120. The telescopic mechanism 120 includes the first flexible member 121 and the second flexible member 122 that are slidably connected to the body structure 110. Therefore, when an operation of picking up or placing a container is not performed, that is, when the telescopic mechanism 120 is in the retracted state, the first flexible member 121 and the second flexible member 122 can reduce sizes in a telescoping direction by means of bending and deformation, thereby reducing the overall space occupied by the picking or placing assemblies 100 in the telescoping direction, which in turn reduces a width of the robot 300, and improving space utilization of a warehousing system. In addition, the fork 200 may be disposed on the post 320 in a lifting and lowering configuration, so that the fork 200 may pick up and place containers of different heights.

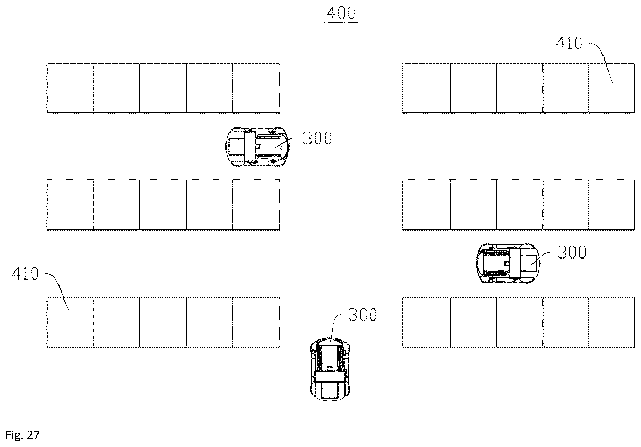

According to another aspect of the embodiments of this application, a warehousing system is further provided. Specifically, referring to FIG. 27, FIG. 27 shows a layout structure of a warehousing system. As shown in the figure, the warehousing system 400 includes a rack 410 and a robot 300 in the foregoing embodiment. The robot 300 is configured totransport a container to the rack 410 and/or transport a container from the rack 410.

In the warehousing system 400 provided in the embodiment of this application, the picking or placing assemblies 100 that are opposite on two sides of the housing 210 of the fork 200 use a telescopic mechanism 120. The telescopic mechanism 120 includes the first flexible member 121 and the second flexible member 122 that are slidably connected to the body structure 110. Therefore, when an operation of picking up or placing a container is not performed, that is, when the telescopic mechanism 120 is in the retracted state, the first flexible member 121 and the second flexible member 122 can reduce sizes in a telescoping direction by means of bending and deformation, thereby reducing the overall space occupied by the picking or placing assemblies 100 in the telescoping direction, which in turn reduces a space occupied by the robot 300, thereby improving space utilization of a warehousing system.

Finally, it should be noted that: the foregoing embodiments are merely used for describing the technical solutions of the present invention, but are not intended to limit the present invention. Although the present invention is described in detail with reference to the foregoing embodiments, it should be appreciated by a person skilled in the art that, modifications may still be made to the technical solutions described in the foregoing embodiments, or equivalent replacements may be made to the part of the technical features; and these modifications or replacements will not cause the essence of corresponding technical solutions to depart from the scope of the technical solutions in the embodiments of this application, and they should all be included in the scope of the claims and specification of the present application. In particular, as long as there is no structural conflict, the technical features mentioned in the embodiments may be combined in any way. This application is not limited to the specific embodiments disclosed herein, but includes all technical solutions falling within the scope of the claims.

## Claims

1. A picking or placing assembly, comprising:
a body structure;
a telescopic mechanism, comprising:
a first flexible member slidably connected to the body structure; and
a second flexible member slidably connected to the body structure;
wherein when the telescopic mechanism is in an extended state relative to the body structure,
at least part of the first flexible member and at least part of the second flexible member are interlocked to form a rigid arm, at least part of the rigid arm is configured to extend relative to the body structure, and the rigid arm is configured to pick up or place a container; and
when the telescopic mechanism is in a retracted state relative to the body structure, at least part of the first flexible member and at least part of the second flexible member are separated from each other, and at least part of the first flexible member and at least part of the second flexible member are bent; and
a driving mechanism connected to the telescopic mechanism, wherein the driving mechanism is configured to drive the telescopic mechanism to telescopically slide relative to the body structure.

2. The picking or placing assembly according to claim 1, wherein a side of the first flexible member and a side of the second flexible member that face each other are provided with interlocked structures, and the first flexible member and the second flexible member are interlocked through cooperation between the interlocked structures.

3. The picking or placing assembly according to claim 2, wherein each interlocked structure comprises at least one of zipper teeth and magnets.

4. The picking or placing assembly according to claim 1, wherein both the first flexible member and the second flexible member are bendable only in a direction perpendicular to a respective telescoping direction of the first flexible member and the second flexible member; and
the first flexible member and the second flexible member are fastened to each other at an end facing an extension direction, so that the first flexible member and the second flexible member that are extended are interlocked to form the rigid arm.

5. The picking or placing assembly according to claim 1, wherein when the telescopic mechanism is in the retracted state, at least part of the first flexible member and at least part of the second flexible member are bent in a fold-back form.

6. The picking or placing assembly according to claim 1, wherein when the telescopic mechanism is in the retracted state, at least part of the first flexible member and at least part of the second flexible member are bent in opposite directions.

7. The picking or placing assembly according to claim 6, wherein the first flexible member comprises a first segment and a second segment that are connected, and the second flexible member comprises a third segment and a fourth segment that are connected; and
when the telescopic mechanism is in the retracted state, the first segment and the third segment are bent, and the first segment and the third segment are bent in opposite directions, at least part of the second segment and at least part of the fourth segment are straight, and at least part of the second segment and at least part of the fourth segment are interlocked to form the rigid arm.

8. The picking or placing assembly according to claim 7, wherein when the telescopic mechanism is in the extended state, the second segment and the fourth segment are entirely interlocked, at least part of the first segment and at least part of the third segment are straight, at least part of the first segment and at least part of the third segment are interlocked, and the at least part of the first segment and the at least part of the third segment that are interlocked together with the second segment and the fourth segment that are entirely interlocked jointly form the rigid arm.

9. The picking or placing assembly according to claim 8, wherein when the telescopic mechanism is in the extended state, the first segment and the third segment are entirely straight, the first segment and the third segment are entirely interlocked, and the first segment and the third segment that are entirely interlocked together with the second segment and the fourth segment that are entirely interlocked jointly form the rigid arm.

10. The picking or placing assembly according to any one of claims 1 to 9, wherein the body structure comprises a base body and a cover, and a side of the base body defines a first sliding groove, a second sliding groove and a cooperation groove;
the first sliding groove comprises a first curved groove and a first straight groove communicating with each other;
the second sliding groove comprises a second curved groove and a second straight groove communicating with each other;
the first straight groove and the second straight groove extend in a telescoping direction of the telescopic mechanism; an end of the first straight groove and an end of the second straight groove facing the extension direction both communicate with the cooperation groove, and an end of the cooperation groove in the extension direction communicates with the outside of the base body;
the first flexible member is slidably disposed in the first sliding groove, and the second flexible member is slidably disposed in the second sliding groove;
when the telescopic mechanism is in the retracted state, at least part of the first flexible member is disposed in the first curved groove, at least part of the second flexible member is disposed in the second curved groove, and the first flexible member located in the first curved groove is separated from the second flexible member located in the second curved groove;
when the telescopic mechanism is in the extended state, both the first flexible member and the second flexible member move toward the extension direction, and the first flexible member and the second flexible member that enter and pass through the cooperation groove are interlocked to form the rigid arm, and at least part of the rigid arm extends out of the base body from the end of the cooperation groove; and
the cover is disposed on the side of the base body on which the first sliding groove is located.

11. The picking or placing assembly according to claim 10, wherein a first guide ball is movably connected to an end of the first flexible member that is away from the cooperation groove in the extension direction of the first flexible member, and the first guide ball is configured to move with the first flexible member in the first sliding groove; and/or
a second guide ball is movably connected to an end of the second flexible member that is away from the cooperation groove in the extension direction of the second flexible member, and the second guide ball is configured to move with the second flexible member in the second sliding groove.

12. The picking or placing assembly according to any one of claims 1 to 9, wherein a guiding and limiting member is provided on the body structure, and the guiding and limiting member is configured to abut a side of at least part of the first flexible member and a side of at least part of the second flexible member that are opposite when the telescopic mechanism slides relative to the body structure, so that the at least part of the first flexible member and the at least part of the second flexible member are interlocked to form the rigid arm, and the rigid arm telescopically slides in a fixed telescoping direction.

13. The picking or placing assembly according to claim 12, wherein the guiding and limiting member comprises a limiting wheel rotatably connected to the body structure, and the limiting wheel is configured to cooperate with two sides of the rigid arm, so that the limiting wheel rotates in accordance with sliding of the rigid arm.

14. The picking or placing assembly according to any one of claims 1 to 9, wherein the first flexible member and the second flexible member are disposed in mirror symmetry relative to a straight line parallel to the telescoping direction.

15. The picking or placing assembly according to any one of claims 1 to 9, wherein the driving mechanism comprises a driving member and a driven wheel, the driving member is connected to the first flexible member and/or the second flexible member through the driven wheel, and the driving member is configured to drive the telescopic mechanism to slide through the driven wheel.

16. The picking or placing assembly according to claim 15, wherein a driven cooperation structure is provided on at least one of the side of the first flexible member and the side of the second flexible member that are opposite;
driven teeth are provided along periphery of the driven wheel, so that when the driven wheel rotates, the driven wheel is successively connected to different positions of the driven cooperation structure through the driven teeth, to drive the telescopic mechanism to slide.

17. The picking or placing assembly according to claim 16, wherein an output axis of the driving member is connected to the driven wheel through a right-angle reducer, so that a plane in which the output axis is located is coplanar with or parallel to a plane in which the rigid arm is located.

18. The picking or placing assembly according to any one of claims 1 to 9, wherein the telescopic mechanism further comprises a pulling member rotatably connected on an end of the rigid arm facing the extension direction, the pulling member is configured to rotate when the rigid arm is in the extended state and to protrude from a side of the rigid arm, to pull and move the container during retraction of the rigid arm; and
a limiting sensor is provided on the rigid arm, and the limiting sensor is configured to detect a rotation angle of the pulling member and to control the pulling member to stop rotating after the pulling member rotates into position.

19. The picking or placing assembly according to claim 18, wherein a position detection sensor is provided at an end of the rigid arm, and the position detection sensor is configured to detect a pose of the container.

20. The picking or placing assembly according to any one of claims 1 to 9, wherein a container picking or placing sensor is provided at a side of the rigid arm, and the container picking or placing sensor is configured to detect whether there is a container on the side of the rigid arm.

21. The picking or placing assembly according to any one of claims 1 to 9, wherein the picking or placing assembly further comprises a pushing member provided at a side of the rigid arm, and the pushing member is configured to push and move the container during extension of the rigid arm.

22. A fork, comprising a housing and the picking or placing assembly according to any one of claims 1 to 21, wherein there are two picking or placing assemblies, and the two picking or placing assemblies are disposed on two opposite sides of the housing respectively, an area between the two picking or placing assemblies on the housing forms a container storage area, and the two picking or placing assemblies are configured to pull a container into the container storage area and/or push a container out of the container storage area.

23. The fork according to claim 22, further comprising a tray, wherein the tray is disposed in the container storage area, and the tray is configured to carry a container; and
the tray is slidably connected to the housing in an extension direction of a rigid arm, a sliding travel of the tray is less than or equal to a sliding travel of the telescopic mechanism, and the tray is configured to cooperate with the telescopic mechanism during sliding to perform picking up or placing of the container.

24. The fork according to claim 23, wherein the picking or placing assembly further comprises a pushing member provided at a side of the rigid arm, wherein the pushing member is configured to push and withdraw the tray during retraction of the rigid arm.

25. A robot, comprising a chassis, a vertical post, and the fork according to any one of claims 20 to 24, wherein the vertical post is arranged on the chassis, and the fork is arranged on the vertical post and capable of lifting or lowering relative to the vertical post.

26. A warehousing system, comprising a rack and the robot according to claim 25, wherein the robot is configured to transport a container to the rack and/or transport a container from the rack.
